# EUROPEAN PATENT APPLICATION

(11) **EP 4 627 899 A1**
(43) Date of publication of application: **08.10.2025**
(21) Application number: 25165280.6
(22) Date of filing: 21.03.2025
(51) Int. Cl.: A01B 69/04, A01D 34/00

(54) **OPERATION DEVICE AND WORK MACHINE WITH OPERATION DEVICE**

(30) Priority: 28.03.2024 JP 2024053087
(71) Applicant: Yanmar Holdings Co., Ltd., Osaka-shi, Osaka (JP)
(72) Inventor: MIYAKE, Koji, Okayama-shi (JP); ISHIDA, Hiroyasu, Okayama-shi (JP)
(74) Representative: Sekiguchi, Kazuya

(57) **Abstract**

An operation device 20 includes a stop button 232 that is provided on a front surface of a main body of the operation device 20 and receives, from a user, an instruction to cause a rice transplanter 10 to perform a stop action of autonomous travel and includes partial protruding portions 27a, 27b, and 27c that are provided near the stop button 232 on the front surface of the main body and protrude forward from the front surface of the main body.

## Description

### TECHNICAL FIELD

The present invention relates to an operation device that causes a work machine to perform an action.

### BACKGROUND ART

There is a conventionally known work vehicle capable of autonomously traveling in a field along a target route set in advance. There is a known operation device (remote controller) that allows a user to start or stop autonomous travel of a work vehicle at a location away from the work vehicle (see, for example, Patent Document 1).

### PRIOR ART DOCUMENT

### PATENT DOCUMENT

Patent Document 1: Japanese Unexamined Patent Publication No. 2022-96512

### SUMMARY OF INVENTION

### TECHNICAL PROBLEM

The operation device is provided with a plurality of operation portions (operation buttons) that receives user operations, and a function for causing the work vehicle to perform an action is assigned to each operation portion. As described above, when the plurality of operation portions is provided in the operation device, it is difficult for the user to grasp the functions assigned to the respective operation portions. For this reason, when a user operates a target operation portion, the user has to check the operation device by directly looking at the operation device so as not to press the wrong operation portion, which causes a problem of deterioration in the operability.

An object of the present invention is to provide an operation device and a work machine in which the operability of the operation device that causes the work machine to perform an action can be improved.

### SOLUTION TO PROBLEM

An operation device according to the present invention is an operation device that causes a work machine to perform an action. The operation device includes a first operation portion that is provided on a front surface of a main body of the operation device and receives, from a user, an instruction to cause the work machine to perform a specific action and a protruding portion that is provided near the first operation portion on the front surface of the main body and protrudes forward from the front surface of the main body.

The work machine according to the present invention starts and stops autonomous travel in accordance with an instruction output from the operation device.

### ADVANTAGEOUS EFFECTS OF INVENTION

According to the present invention, it is possible to provide an operation device and a work machine in which the operability of the operation device that causes the work machine to perform an action can be improved.

### BRIEF DESCRIPTION OF DRAWINGS

FIG. 1 is a block diagram illustrating a configuration of an autonomous traveling system according to an embodiment of the present invention.
FIG. 2A is a side view illustrating an example of a work vehicle (rice transplanter) according to the embodiment of the present invention.
FIG. 2B is a top view illustrating an example of the work vehicle (rice transplanter) according to the embodiment of the present invention.
FIG. 3 is a diagram illustrating an example of a field and a target route according to the embodiment of the present invention.
FIG. 4 is a plan view illustrating an overall configuration of an operation device according to the embodiment of the present invention.
FIG. 5 is a diagram illustrating a configuration of a housing portion that houses the operation device according to the embodiment of the present invention.
FIG. 6 is a diagram illustrating a housed state of the operation device according to the embodiment of the present invention.
FIG. 7 is a partially enlarged perspective view of the operation device according to the embodiment of the present invention.
FIG. 8 is a partially enlarged perspective view of the operation device according to the embodiment of the present invention.
FIG. 9A is a diagram illustrating another configuration of the operation device according to the embodiment of the present invention.
FIG. 9B is a diagram illustrating another configuration of the operation device according to the embodiment of the present invention.
FIG. 10 is a diagram illustrating a configuration of a grip portion of the operation device according to the embodiment of the present invention.
FIG. 11A is a perspective view illustrating the operation device according to a modification of the present invention.
FIG. 11B is a perspective view illustrating the operation device according to a modification of the present invention.
FIG. 12 is a diagram illustrating another configuration of the operation device according to the embodiment of the present invention.

### DESCRIPTION OF EMBODIMENTS

The following embodiment is an example embodying the present invention, and does not limit the technical scope according to the present invention.

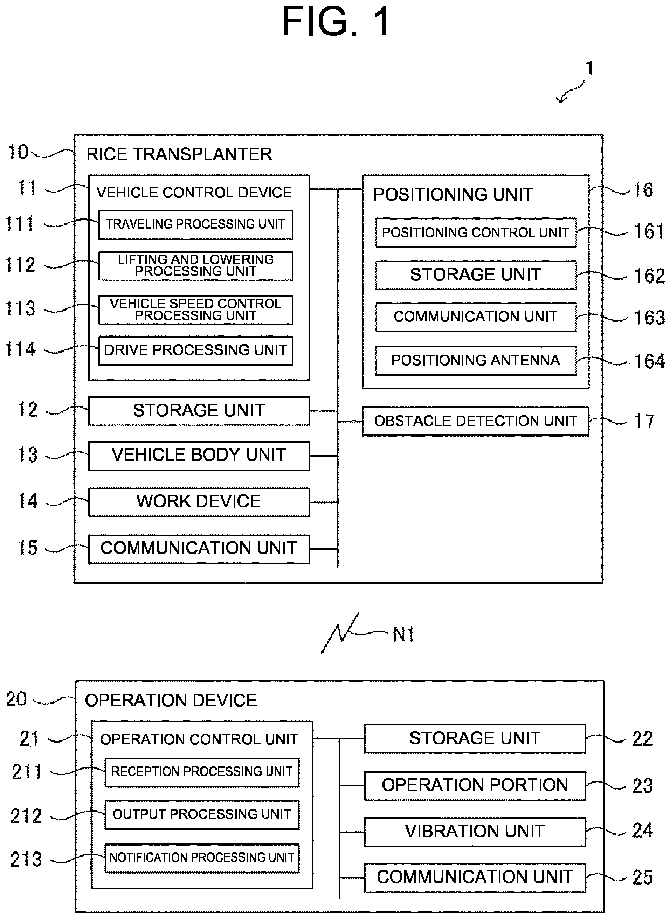

As illustrated in FIG. 1, an autonomous traveling system 1 according to the embodiment of the present invention includes a rice transplanter 10 and an operation device 20. The rice transplanter 10 and the operation device 20 can communicate with each other via a communication network N1. For example, the rice transplanter 10 and the operation device 20 can communicate with each other via Bluetooth (registered trademark), wireless LAN (Wi-Fi (registered trademark)), infrared communication, or the like.

According to the present embodiment, the rice transplanter 10 will be described as an example of a work machine according to the present invention. According to another embodiment, the work machine may be a work vehicle such as a tractor, a combine harvester, a construction machine, or a snowplow, or a flying object such as a drone for spraying work. The rice transplanter 10 is an autonomous traveling vehicle having a configuration capable of autonomous travel (autonomic travel) in a field registered in advance. For example, the operator (user) registers a work target field and sets a travel route (target route) along which the rice transplanter 10 autonomously travels in the field. The rice transplanter 10 autonomously travels along the target route based on the position information of the current position of the rice transplanter 10 calculated by a positioning unit 16. The rice transplanter 10 performs planting work while autonomously traveling in the field.

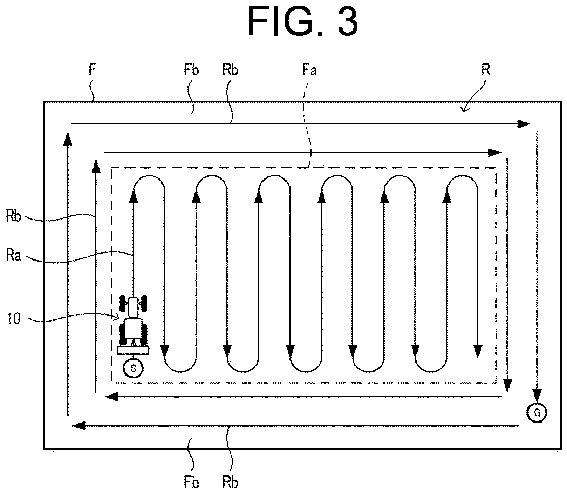

For example, the rice transplanter 10 autonomously travels along a target route R in a field F illustrated in FIG. 3. The field F illustrated in FIG. 3 includes an inner area Fa and a headland area Fb (outer area). In the field F, the target route R including a plurality of work routes is set in advance. For example, a work route Ra for traveling back and forth in parallel from a travel start position S is set in the inner area Fa, and a work route Rb for traveling spirally (traveling around) on the outer periphery toward a travel end position G is set in the headland area Fb.

The rice transplanter 10 starts autonomous travel from the travel start position S and performs work while traveling back and forth along the work route Ra in the inner area Fa. In the headland area Fb, the rice transplanter 10 performs work while traveling around to the travel end position G along the work route Rb.

Here, the work route Rb of the headland area Fb is set based on the number of working strokes. FIG. 3 illustrates the work route Rb in a case where the number of working strokes is two, but the number of working strokes of the work route Rb may be one. On the work route Rb illustrated in FIG. 3, the rice transplanter 10 performs work while traveling around the headland area Fb only twice. The width of the headland area Fb is set to a width corresponding to the number of working strokes. Therefore, when the number of working strokes is two, the width of the headland area Fb is substantially twice the working width of the rice transplanter 10.

The target route R is not limited to the route illustrated in FIG. 3 and is set as appropriate in accordance with the shape of the field F, the type of work, and the like. For example, the target route R is appropriately set in accordance with the number of working strokes of the headland area Fb or the width of the headland area Fb.

The operation device 20 is an operation remote controller that is operated by an operator and causes the rice transplanter 10 to perform an action. For example, at a location away from the rice transplanter 10, the operator can operate the operation device 20 to instruct the rice transplanter 10 to start and stop autonomous travel, perform a manual operation (forward and backward), start and stop a planting action, change the vehicle speed, lift and lower a work device 14 (planting unit), and the like. The operation device 20 can give an action instruction to the rice transplanter 10 when the operation device 20 is located in a range in which the operation device 20 can communicate with the rice transplanter 10. For example, the rice transplanter 10 starts and stops autonomous travel in accordance with an instruction output from the operation device 20.

The operation device 20 is provided with a plurality of operation portions (operation buttons) that receives an operation of the operator, and the respective functions for causing the rice transplanter 10 to perform an action are assigned to the respective operation portions. Conventional operation devices have a problem that the operability is deteriorated since an operator has difficulty in grasping the functions assigned to the respective operation portions and has to directly look at and confirm the operation device so as to prevent erroneous pressing when operating a target operation portion. Conversely, the operation device 20 according to the present embodiment has a configuration capable of improving the operability as described below. Specific configurations of the rice transplanter 10 and the operation device 20 will be described below.

### [Rice Transplanter 10]

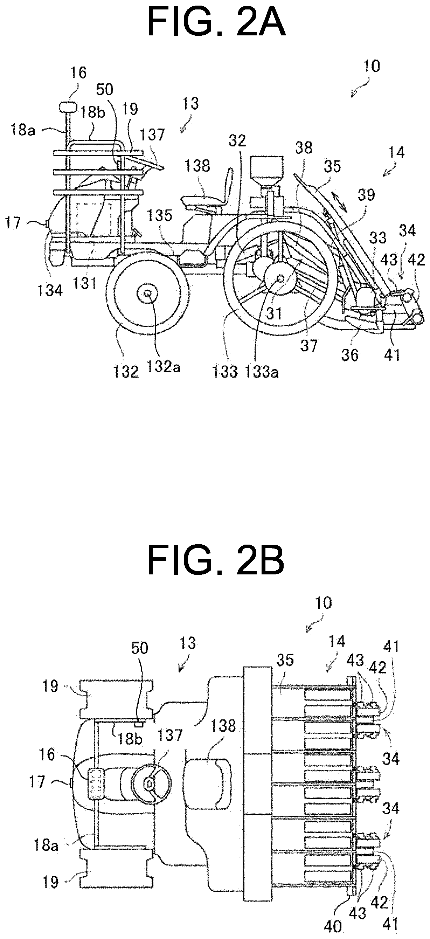

As illustrated in FIGS. 1, 2A, and 2B, the rice transplanter 10 includes a vehicle control device 11, a storage unit 12, a vehicle body unit 13, the work device 14, a communication unit 15, the positioning unit 16, an obstacle detection unit 17, and the like. The vehicle control device 11 is electrically connected to the storage unit 12, the vehicle body unit 13, the work device 14, the positioning unit 16, the obstacle detection unit 17, and the like. The vehicle control device 11 and the positioning unit 16 may be capable of performing wireless communication.

FIG. 2A is a side view of the rice transplanter 10, and FIG. 2B is a plan view of the rice transplanter 10. The rice transplanter 10 includes the vehicle body unit 13, a pair of right and left front wheels 132, a pair of right and left rear wheels 133, the work device 14 (planting unit), and the like.

An engine (drive unit) 131 is provided inside a hood 134 provided in a front portion of the vehicle body unit 13. The power generated by the engine 131 is transmitted to the front wheels 132 and the rear wheels 133 via a transmission case 135. The power transmitted via the transmission case 135 is also transmitted to the work device 14 via a PTO shaft 37 provided in a rear portion of the vehicle body unit 13. Power is transmitted to the PTO shaft 37 via a planting clutch (working clutch, PTO clutch) (not illustrated). A driver's seat 138 on which an operator rides is provided at a position between the front wheel 132 and the rear wheel 133 in the front-rear direction of the vehicle body unit 13.

Operation tools such as a steering handle 137, a main shift lever (not illustrated), and a planting clutch lever (not illustrated) are provided in front of the driver's seat 138. The steering handle 137 is an operation tool for changing a steering angle of the rice transplanter 10. The main shift lever is configured to be able to select at least positions of "forward", "backward", "neutral", and "seedling relay". When the main shift lever is operated to the "forward" position, the power is transmitted such that the front wheels 132 and the rear wheels 133 rotate in a direction in which the rice transplanter 10 moves forward. When the main shift lever is operated to the "backward" position, the power is driven such that the front wheels 132 and the rear wheels 133 rotate in a direction in which the rice transplanter 10 moves backward. When the main shift lever is operated to the "neutral" position, the transmission of power to the front wheels 132 and the rear wheels 133 is cut off. When the main shift lever is operated to the "seedling relay" position, the transmission of power to the front wheels 132, the rear wheels 133, and the PTO shaft 37 is cut off. When the planting clutch lever is operated to the "ON" position, the planting clutch enters a transmission state in which power is transmitted to the PTO shaft 37 (i.e., the work device 14), and when the planting clutch lever is operated to the "OFF" position, the planting clutch enters a cutoff state in which power is not transmitted to the PTO shaft 37. That is, when the planting clutch lever is set to the "ON" position, the driving of the work device 14 is started and the planting action is started. When the planting clutch lever is set to the "OFF" position, the driving of the work device 14 is stopped and the planting action is stopped.

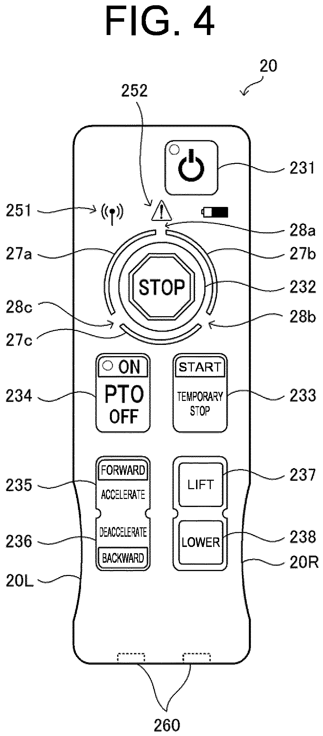

According to the present embodiment, the vehicle control device 11 switches "ON" and "OFF" of the planting clutch. When the vehicle control device 11 sets the planting clutch to "ON", driving of the work device 14 is started, and the planting action is started. When the vehicle control device 11 sets the planting clutch to "OFF", the driving of the work device 14 is stopped, and the planting action is stopped. The vehicle control device 11 may switch "ON" and "OFF" of the planting clutch as internal processing, and does not need to move the position of the planting clutch lever. The vehicle control device 11 can switch "ON" and "OFF" of the planting clutch in accordance with a user operation ("ON" and "OFF" of a PTO button 234 of FIG. 4) in the operation device 20.

The work device 14 is connected to the rear of the vehicle body unit 13 via a lifting and lowering link mechanism 31. The lifting and lowering link mechanism 31 has a parallel link structure including a top link 39, a lower link 38, and the like. A lifting and lowering cylinder (lifting and lowering device) 32 is connected to the lower link 38. By expanding and contracting the lifting and lowering cylinder 32, the entire work device 14 can be lifted and lowered in a vertical direction. Thus, the height of the work device 14 can be changed between a work position (work height) at which the work device 14 is lowered to perform planting work and a non-work position (non-work height) at which the work device 14 is lifted to perform no planting work. Although the lifting and lowering cylinder 32 is a hydraulic cylinder, an electric cylinder may be used. A configuration may be adopted in which the work device 14 is lifted and lowered by an actuator other than the cylinder. The vehicle control device 11 can lift and lower the work device 14 in response to a user operation (a lifting button 237 and a lowering button 238 in FIG. 4) on the operation device 20.

The work device 14 (planting unit) includes a planting input case 33, a plurality of planting units 34, a seedling table 35, a plurality of floats 36, and the like.

Each of the planting units 34 includes a planting transmission case 41 and a rotary case 42. Power is transmitted to the planting transmission case 41 via the PTO shaft 37 and the planting input case 33. The rotary cases 42 are attached to both sides of each of the planting transmission cases 41 in a vehicle width direction. Two planting claws 43 are attached to each of the rotary cases 42 so as to be arranged in the traveling direction of the rice transplanter 10. Planting for one row is performed by the two planting claws 43.

As illustrated in FIG. 2A, the seedling table 35 is provided in front of and above the planting unit 34, and is configured so that a seedling mat can be placed thereon. The seedling table 35 is configured to be reciprocally movable in the lateral direction (slidable in the lateral direction). The seedling table 35 is configured so as to intermittently vertically feed and convey the seedling mat downward at the reciprocating end of the seedling table 35. With this configuration, the seedling table 35 can supply the seedlings of the seedling mat to each of the planting units 34. Thus, in the rice transplanter 10, the seedlings can be sequentially supplied to the respective planting units 34, and the seedlings can be continuously planted.

The float 36 illustrated in FIG. 2A is provided at the lower portion of the work device 14, and is provided so that the lower surface thereof can contact the ground. When the float 36 comes into contact with the ground, the paddy field before planting seedlings is leveled. Further, the float 36 is provided with a float sensor (not illustrated) that detects a swing angle of the float 36. The swing angle of the float 36 corresponds to the distance between the paddy field and the work device 14. The rice transplanter 10 can keep the ground height of the work device 14 constant by operating the lifting and lowering cylinder 32 based on the swing angle of the float 36 to lift and lower the work device 14.

A spare seedling table 19 is provided on the outer side of the hood 134 in the vehicle width direction, and a seedling box containing spare mat seedlings can be mounted thereon. The spare seedling table 19 is fixed to a connection frame 18b extending in the vertical direction and the front-rear direction on each of the right and left sides of the hood 134. Upper portions of the pair of right and left spare seedling tables 19 are connected to each other by a connection frame 18a extending in the vertical direction and the vehicle width direction. The positioning unit 16 is provided at the center of the connection frame 18a in the vehicle width direction.

A housing portion 50 that houses the operation device 20 is provided on the right connection frame 18b. For example, when the operator gets on the rice transplanter 10, the operator can house the operation device 20 in the housing portion 50. The housing portion 50 will be described in detail below.

The positioning unit 16 is a communication device that includes a positioning control unit 161, a storage unit 162, a communication unit 163, a positioning antenna 164 (see FIG. 1), and the like. For example, as illustrated in FIGS. 2A and 2B, the positioning unit 16 is provided at a front central upper portion of the rice transplanter 10. The installation location of the positioning unit 16 is not limited. The positioning control unit 161, the storage unit 162, the communication unit 163, and the positioning antenna 164 of the positioning unit 16 may be provided at different positions in the rice transplanter 10 in a distributed manner. A battery is connected to the positioning unit 16, and the positioning unit 16 can be operated even when the engine 131 is stopped. As the positioning unit 16, for example, a mobile phone terminal, a smartphone, a tablet terminal, a quantum compass, or the like may be used instead.

The positioning control unit 161 is a computer system including one or more processors and storage memories such as a non-volatile memory and a RAM. The storage unit 162 is a non-volatile memory or the like that stores a program for causing the positioning control unit 161 to execute positioning processing, and data such as positioning information and movement information. For example, the program is non-transitorily recorded in a computer-readable recording medium such as a CD or a DVD, read by a predetermined reading device (not illustrated), and stored in the storage unit 162. The program may be downloaded from a server (not illustrated) to the positioning unit 16 via the communication network N1 and stored in the storage unit 162.

The communication unit 163 is a communication interface for connecting the positioning unit 16 to a communication network in a wired or wireless manner and performing data communication with an external device such as a base station server via the communication network in accordance with a predetermined communication protocol.

The positioning antenna 164 is an antenna that receives radio waves (GNSS signals) transmitted from satellites.

The positioning control unit 161 calculates the current position of the rice transplanter 10 based on a GNSS signal received by the positioning antenna 164 from a satellite. For example, in a case where the rice transplanter 10 autonomously travels in the field F, when the positioning antenna 164 receives radio waves (transmission time, orbit information, and the like) transmitted from each of a plurality of satellites, the positioning control unit 161 calculates the distance between the positioning antenna 164 and each satellite, and calculates the current position (latitude and longitude) of the rice transplanter 10 based on the calculated distance. The positioning control unit 161 may perform positioning by a real-time kinematic method (RTK-GNSS positioning method (RTK method)) in which the current position of the rice transplanter 10 is calculated using correction information corresponding to a base station (reference station) close to the rice transplanter 10. As described above, the rice transplanter 10 autonomously travels by using the positioning information by the RTK method. The current position of the rice transplanter 10 may be the same position as the determined position (for example, the position of the positioning antenna 164), or may be a position shifted from the determined position (for example, the planting action position of the planting unit 34). The positioning control unit 161 may calculate (determine) the current position of the rice transplanter 10 by using a quantum compass.

The obstacle detection unit 17 is provided in front of the vehicle body unit 13. The obstacle detection unit 17 is configured by a sensor that detects an obstacle in a predetermined detection area using, for example, infrared rays, ultrasonic waves, or millimeter waves. For example, the obstacle detection unit 17 may be a lidar sensor (distance sensor) capable of three dimensionally measuring a distance to a measurement target (obstacle) using a laser, or may be a sonar sensor including a plurality of sonars capable of measuring a distance to a measurement target using an ultrasonic wave. The obstacle is, for example, a ridge, an intake, a utility pole, a material temporarily placed in the field F, or a person. When detecting the obstacle, the obstacle detection unit 17 transmits a detection result (measurement information) to the vehicle control device 11. The vehicle control device 11 decelerates the speed or stops the rice transplanter 10 when the obstacle detection unit 17 detects an obstacle in the detection area. The obstacle detection unit 17 may be provided on each of the front side, the rear side, the left side, and the right side. In this case, the vehicle control device 11 controls the travel of the rice transplanter 10 based on the detection result of each of the obstacle detection units 17.

The storage unit 12 is a non-volatile storage unit such as a hard disk drive (HDD), a solid state drive (SSD), or a flash memory that stores various types of information. The storage unit 12 stores a control program such as an autonomous travel program for causing the vehicle control device 11 to execute autonomous traveling processing. For example, the autonomous travel program is non-transitorily recorded in a computer-readable recording medium such as a flash ROM, an EEPROM, a CD, or a DVD, read by a predetermined reading device (not illustrated), and stored in the storage unit 12. The autonomous travel program may be downloaded from a server (not illustrated) to the rice transplanter 10 via the communication network N1 and stored in the storage unit 12. The storage unit 12 may store the route data of the target route R generated by the operation device 20.

The vehicle control device 11 includes control devices such as a CPU, a ROM, and a RAM. The CPU is a processor that executes various kinds of arithmetic processing. The ROM is a non-volatile storage unit in which control programs such as a BIOS and an OS for causing the CPU to execute various kinds of arithmetic processing are stored in advance. The RAM is a volatile or non-volatile storage unit that stores various kinds of information, and is used as a temporary storage memory (work area) for various kinds of processing executed by the CPU. The vehicle control device 11 controls the rice transplanter 10 by causing the CPU to execute various control programs stored in advance in the ROM or the storage unit 12.

The vehicle control device 11 controls the action of the rice transplanter 10 in response to various user operations on the rice transplanter 10. The vehicle control device 11 executes autonomous traveling processing of the rice transplanter 10 based on the current position of the rice transplanter 10 calculated by the positioning unit 16 and the target route R set in advance.

As illustrated in FIG. 1, the vehicle control device 11 includes various processing units such as a traveling processing unit 111, a lifting and lowering processing unit 112, a vehicle speed control processing unit 113, and a drive processing unit 114. The vehicle control device 11 functions as the various processing units by causing the CPU to execute various types of processing in accordance with the autonomous travel program. Some or all of the processing units may be constituted by electronic circuits. The autonomous travel program may be a program for causing a plurality of processors to function as the processing units.

The traveling processing unit 111 controls travel of the rice transplanter 10. Specifically, the traveling processing unit 111 causes the rice transplanter 10 to autonomously travel along the target route R set in the field F. For example, when a travel start instruction is acquired from the operation device 20, the traveling processing unit 111 starts autonomous travel of the rice transplanter 10. For example, in a case where the rice transplanter 10 satisfies an autonomous travel start condition (work start condition), when the operator presses (for example, long-presses) a start/stop button 233 (see FIG. 4) on the operation device 20, the operation device 20 outputs a travel start instruction to the rice transplanter 10. When acquiring the travel start instruction from the operation device 20, the traveling processing unit 111 causes the rice transplanter 10 to start autonomous travel along the target route R. For example, the traveling processing unit 111 causes the rice transplanter 10 to travel straight from the start end to the terminal end of each work route and to travel around from the start end to the terminal end of each turning route.

The traveling processing unit 111 stops the travel of the rice transplanter 10 when acquiring a stop instruction from the operation device 20. For example, when the operator presses (e.g., short-presses) the start/stop button 233 (see FIG. 4) on the operation device 20, the operation device 20 outputs a temporary stop instruction to the rice transplanter 10. Further, for example, when the operator presses a stop button 232 (see FIG. 4) on the operation device 20, the operation device 20 outputs an autonomous travel stop instruction to the rice transplanter 10.

When the temporary stop instruction is acquired, the traveling processing unit 111 temporarily stops the autonomous travel in a state where the autonomous travel mode is maintained. In this case, the traveling processing unit 111 restarts the autonomous travel when the travel start instruction is acquired in the temporary stop state. The traveling processing unit 111 stops the engine 131 when the autonomous travel stop instruction is acquired. In this case, the restart of the autonomous travel by the operation device 20 is prohibited, and the traveling processing unit 111 restarts the autonomous travel when the operator riding on the rice transplanter 10 starts the engine and performs the autonomous travel start operation again.

Further, the traveling processing unit 111 controls the travel of the rice transplanter 10 based on the detection result by the obstacle detection unit 17. Specifically, the traveling processing unit 111 decelerates the speed or stops the rice transplanter 10 when the obstacle detection unit 17 detects an obstacle. Further, the traveling processing unit 111 may cause the rice transplanter 10 to perform avoidance travel to avoid the obstacle.

Further, the traveling processing unit 111 causes the rice transplanter 10 to travel in accordance with a travel instruction acquired from the operation device 20 in a manually operable state in the autonomous travel mode. For example, the traveling processing unit 111 causes the rice transplanter 10 to travel forward when a forward instruction is acquired from the operation device 20 while the autonomous travel is temporarily stopped. For example, when the operator presses an acceleration/forward button 235 (see FIG. 4) on the operation device 20, the operation device 20 outputs a forward travel instruction to the rice transplanter 10, and the traveling processing unit 111 causes the rice transplanter 10 to travel forward in accordance with the forward travel instruction. Further, the traveling processing unit 111 causes the rice transplanter 10 to travel backward when a backward travel instruction is acquired from the operation device 20 while the autonomous travel is temporarily stopped. For example, when the operator presses a deceleration/backward button 236 (see FIG. 4) on the operation device 20, the operation device 20 outputs a backward travel instruction to the rice transplanter 10, and the traveling processing unit 111 causes the rice transplanter 10 to travel backward in accordance with the backward travel instruction.

The lifting and lowering processing unit 112 controls the position (posture) of the work device 14. Specifically, the lifting and lowering processing unit 112 changes the height of the work device 14 between a work position (work height) at which the work device 14 is lowered to perform the planting work and a non-work position (non-work height) at which the work device 14 is lifted to perform no planting work. The lifting and lowering processing unit 112 lowers the work device 14 to the work position when the paddy field is leveled by the float 36 (see FIG. 2A). The lifting and lowering processing unit 112 lifts and lowers the work device 14 by inputting a control signal to the lifting and lowering cylinder 32 and causing the lifting and lowering cylinder 32 to expand and contract.

The lifting and lowering processing unit 112 controls the lifting and lowering of the work device 14 based on the position information of the rice transplanter 10. Specifically, the lifting and lowering processing unit 112 lowers the work device 14 from the non-work position to the work position based on the work start position in the target route R.

The lifting and lowering processing unit 112 lifts the work device 14 when a lifting instruction of the work device 14 is acquired from the operation device 20. For example, when the operator presses the lifting button 237 (see FIG. 4) on the operation device 20, the operation device 20 outputs a lifting instruction to the rice transplanter 10, and the lifting and lowering processing unit 112 lifts the work device 14 in accordance with the lifting instruction. The lifting and lowering processing unit 112 lowers the work device 14 when a lowering instruction of the work device 14 is acquired from the operation device 20. For example, when the operator presses the lowering button 238 (see FIG. 4) on the operation device 20, the operation device 20 outputs a lowering instruction to the rice transplanter 10, and the lifting and lowering processing unit 112 lowers the work device 14 in accordance with the lowering instruction.

The vehicle speed control processing unit 113 controls the vehicle speed of the rice transplanter 10 during autonomous travel. Specifically, the vehicle speed control processing unit 113 switches the vehicle speed of the rice transplanter 10 based on the setting information set in advance. For example, when the operator sets the vehicle speed during straight travel and the vehicle speed during turning travel on an operation terminal (not illustrated), the vehicle speed control processing unit 113 switches the vehicle speed (set vehicle speed) of the rice transplanter 10 in accordance with a travel route (straight travel route, turning route, or the like). For example, the vehicle speed control processing unit 113 switches to the set vehicle speed for straight travel when the rice transplanter 10 travels on a straight route, and switches to the set vehicle speed for turning travel when the rice transplanter 10 travels on a turning route.

The vehicle speed control processing unit 113 changes the vehicle speed of the rice transplanter 10 when a vehicle speed change instruction is acquired from the operation device 20. For example, when the operator presses the acceleration/forward button 235 (see FIG. 4) on the operation device 20 while the rice transplanter 10 is autonomously traveling, the operation device 20 outputs an acceleration instruction to the rice transplanter 10. For example, when the operator presses the deceleration/backward button 236 (see FIG. 4) on the operation device 20 while the rice transplanter 10 is autonomously traveling, the operation device 20 outputs a deceleration instruction to the rice transplanter 10.

The drive processing unit 114 controls the driving of the work device 14. Specifically, the drive processing unit 114 starts the driving of the work device 14 to start the planting action (the action of the planting unit 34 to plant seedlings on the paddy field). Specifically, the drive processing unit 114 switches between "on" and "off" of the planting clutch to switch between driving and stopping of the work device 14. For example, the drive processing unit 114 sets the planting clutch to "ON", starts driving the work device 14, and causes the planting unit 34 to start the planting action. The drive processing unit 114 sets the planting clutch to "OFF", stops the driving of the work device 14, and causes the planting unit 34 to stop the planting action.

The drive processing unit 114 starts driving of the work device 14 at the work start position. Specifically, the drive processing unit 114 controls the timing at which the planting clutch is engaged so that the planting action of the planting unit 34 is started when the rice transplanter 10 reaches the work start position, that is, when the planting unit 34 reaches the work start position.

When the drive processing unit 114 acquires a drive instruction of the planting unit 34 from the operation device 20, the drive processing unit 102 sets the planting clutch to "ON" and causes the planting unit 34 to start the planting action. For example, when the operator presses the PTO button 234 (see FIG. 4) (turns on PTO) on the operation device 20, the operation device 20 outputs a drive instruction to the rice transplanter 10. When the drive processing unit 114 acquires a drive stop instruction from the operation device 20, the drive processing unit 102 sets the planting clutch to "OFF" and causes the planting unit 34 to stop the planting action. For example, when the operator presses the PTO button 234 (see FIG. 4) (turns off PTO) on the operation device 20, the operation device 20 outputs a drive stop instruction to the rice transplanter 10.

### [Operation Device 20]

As illustrated in FIG. 1, the operation device 20 is a device including an operation control unit 21, a storage unit 22, an operation portion 23, a vibration unit 24, a communication unit 25, and the like. The operation device 20 is a device (remote controller) capable of remotely operating the rice transplanter 10. The operation device 20 may be a portable information terminal such as a smartphone or a tablet terminal. FIG. 4 illustrates a remote controller as an example of the operation device 20.

The communication unit 25 is a communication interface for connecting the operation device 20 to the communication network N1 in a wireless or wired manner and performing data communication with an external device such as the rice transplanter 10 via the communication network N1 in accordance with a predetermined communication protocol.

The vibration unit 24 is a vibrator that vibrates the main body of the operation device 20. The vibration unit 24 vibrates the main body of the operation device 20 by driving an internal motor to rotate a weight (not illustrated) in accordance with an instruction from the operation control unit 21. The operation device 20 may be capable of switching between enabling and disabling the vibration function in accordance with a setting operation by the operator.

The operation portion 23 is an operation button that receives an operation of the operator. The operation portion 23 is provided on the front surface of the main body of the operation device 20. The operation portion 23 is, for example, a physical switch that can be pressed by the operator with a finger. According to another embodiment, the operation portion 23 may be an image icon displayed on a touch panel.

As illustrated in FIG. 4, the plurality of operation portions 23 is provided on the front surface of the main body of the operation device 20. The plurality of operation portions 23 includes the power button 231, the stop button 232, the start/stop button 233, the PTO button 234, the acceleration/forward button 235, the deceleration/backward button 236, the lifting button 237, and the lowering button 238. A function for causing the rice transplanter 10 to perform an action is assigned to each of the operation portions 23. A specific function of each of the operation portions 23 will be described below.

The storage unit 22 is a non-volatile storage unit such as an HDD, an SSD, or a flash memory that stores various kinds of information. The storage unit 22 stores a control program for causing the operation control unit 21 to execute various types of processing. For example, the control program is non-transitorily recorded in a computer-readable recording medium such as a flash ROM, an EEPROM, a CD, or a DVD, read by a predetermined reading device (not illustrated), and stored in the storage unit 22. The control program may be downloaded from a server (not illustrated) to the operation device 20 via the communication network N1 and stored in the storage unit 22.

The operation control unit 21 includes control devices such as a CPU, a ROM, and a RAM. The CPU is a processor that executes various kinds of arithmetic processing. The ROM is a non-volatile storage unit in which control programs such as a BIOS and an OS for causing the CPU to execute various kinds of arithmetic processing are stored in advance. The RAM is a volatile or non-volatile storage unit that stores various kinds of information, and is used as a temporary storage memory for various kinds of processing executed by the CPU. The operation control unit 21 controls the operation device 20 by causing the CPU to execute various control programs stored in advance in the ROM or the storage unit 22.

As illustrated in FIG. 1, the operation control unit 21 includes various processing units such as a reception processing unit 211, an output processing unit 212, and a notification processing unit 213. The operation control unit 21 functions as the various processing units by causing the CPU to execute various types of processing in accordance with the control program. Some or all of the processing units may be constituted by electronic circuits. The control program may be a program that causes a plurality of processors to function as the processing unit.

The reception processing unit 211 receives an operation performed by the operator on the operation portion 23. Specifically, the reception processing unit 211 receives a pressing operation performed by the operator on each of the plurality of operation portions 23.

The output processing unit 212 outputs, to the rice transplanter 10, operation information (action instruction) corresponding to the operation of the operator received by the reception processing unit 211. The rice transplanter 10 performs a predetermined action in accordance with the operation information (action instruction) acquired from the operation device 20. For example, when the operator presses the specific operation portion 23 of the operation device 20, the reception processing unit 211 receives the pressing operation of the operation portion 23, and the output processing unit 212 outputs, to the rice transplanter 10, the operation information (action instruction) corresponding to the function assigned to the operation portion 23. When acquiring the operation information (action instruction), the rice transplanter 10 performs the action corresponding to the operation information. When acquiring the operation information (action instruction), the rice transplanter 10 notifies (feeds back) the operation device 20 that the operation information has been acquired.

When the operation portion 23 receives an instruction from the operator, the notification processing unit 213 causes at least any one of the operation device 20 and the rice transplanter 10 to notify the information indicating that the instruction has been received. Specifically, when the operator presses the operation portion 23, the output processing unit 212 outputs the operation information to the rice transplanter 10. When acquiring the operation information, the rice transplanter 10 notifies (feeds back) the operation device 20 that the operation information has been acquired. When acquiring the notification, the notification processing unit 213 vibrates the vibration unit 24. Thus, the operator can recognize that his/her operation instruction has been received and the action corresponding to the operation instruction has been executed in the rice transplanter 10.

According to another embodiment, when the operation device 20 includes a display unit, the notification processing unit 213 may cause the display unit to display the information indicating that the instruction has been received. According to another embodiment, when the operation device 20 includes a speaker, the notification processing unit 213 may cause the speaker to emit a sound (buzzer sound, voice, or the like) indicating that the instruction has been received.

As described above, the notification processing unit 213 may cause the information to be notified by at least any one of the method of causing the display unit to display the information, the method of causing the speaker to emit sound, and the method of causing the vibration unit 24 to vibrate.

The notification processing unit 213 may output a notification instruction to the rice transplanter 10. When acquiring the notification instruction from the operation device 20, the rice transplanter 10 emits a sound (buzzer sound, voice, or the like) indicating that the instruction has been acquired from a speaker provided in the rice transplanter 10, or displays the information indicating that the instruction has been acquired on a display unit provided in the rice transplanter 10.

### [Function of Operation Portion 23]

A specific function of each operation portion 23 will be described below.

The power button 231 is an operation portion that turns on/off the power of the operation device 20. The power button 231 is provided at the upper end of the front surface of the main body of the operation device 20. When the power is changed to the ON-state, an LED of the power button 231 is turned on, and when the power is changed to the OFF-state, the LED of the power button 231 is turned off.

The start/stop button 233 is an operation portion that starts autonomous travel of the rice transplanter 10 and temporarily stops the rice transplanter 10 during autonomous travel. The start/stop button 233 is provided on the right side near the center in the vertical direction on the front surface of the main body of the operation device 20.

For example, the operator gets on the rice transplanter 10, moves (manually travels) the rice transplanter 10 to the work start position, performs an operation related to the work start condition, and switches to the autonomous travel mode. Thus, the operator can start the autonomous travel by the operation device 20 at a location away from the rice transplanter 10. For example, when the operator long-presses the start/stop button 233 (an operation to continuously press the button for a predetermined time or more), the output processing unit 212 outputs the travel start instruction to the rice transplanter 10. When acquiring the travel start instruction, the rice transplanter 10 starts autonomous travel and work (planting work) along the target route R.

When the operator presses (short-presses) the start/stop button 233 while the rice transplanter 10 is autonomously traveling, the output processing unit 212 outputs the travel stop instruction to the rice transplanter 10. When acquiring the travel stop instruction, the rice transplanter 10 temporarily stops the autonomous travel and stops PTO driving (work). When the operator long-presses the start/stop button 233 while the rice transplanter 10 is temporarily stopped, the rice transplanter 10 restarts the autonomous travel and PTO driving (work). The operator can start or temporarily stop the autonomous travel by operating the start/stop button 233 at a location away from the rice transplanter 10.

The PTO button 234 is an operation portion that turns on/off PTO driving. The PTO button 234 is provided on the left side near the center in the vertical direction on the front surface of the main body of the operation device 20. For example, when the rice transplanter 10 temporarily stops during the autonomous travel, the drive processing unit 114 switches the planting clutch to "OFF" to stop the driving of the work device 14. When the autonomous travel of the rice transplanter 10 is temporarily stopped and the planting clutch is "OFF" (PTO is OFF), the operator can perform the ON/OFF operation of the PTO button 234. For example, when the operator presses the PTO button 234 to set the ON-state, the output processing unit 212 outputs a PTO drive instruction to the rice transplanter 10. When acquiring the PTO drive instruction, the rice transplanter 10 switches the planting clutch to "ON" to enable the planting action by the planting unit 34. When the operator presses the PTO button 234 to set the OFF-state, the output processing unit 212 outputs a PTO stop instruction to the rice transplanter 10. When acquiring the PTO stop instruction, the rice transplanter 10 switches the planting clutch to "OFF" to stop the planting action by the planting unit 34.

The stop button 232 is an operation portion (emergency stop button) that stops the rice transplanter 10 during autonomous travel. The stop button 232 is provided on the upper side of the front surface of the main body of the operation device 20 and between the power button 231 and the start/stop button 233 and the PTO button 234.

When the operator presses the stop button 232 while the rice transplanter 10 is autonomously traveling, the output processing unit 212 outputs the autonomous travel stop instruction to the rice transplanter 10. When acquiring the autonomous travel stop instruction, the rice transplanter 10 stops the engine 131 to stop the autonomous travel and the work. As described above, since the emergency stop function is assigned to the stop button 232 unlike the temporary stop of the start/stop button 233, the engine of the rice transplanter 10 is stopped when the stop button 232 is pressed. Therefore, when restarting the autonomous travel and the work, the operator needs to get on the rice transplanter 10, start the engine 131, and perform the autonomous travel start operation again. As described above, when the stop button 232 is pressed, the operation device 20 is prohibited from restarting the autonomous travel from a remote place, and therefore, the operator moves to the place of the rice transplanter 10 and performs an operation to restart the autonomous travel after confirming safety around the rice transplanter 10.

As described above, since the stop button 232 is an operation portion for emergency stop, it is desirable to have a configuration in which the STOP button is not unnecessarily pressed due to unexpected contact with a finger or the like, and it is further desirable to have a configuration in which the STOP button can be immediately pressed in case of an emergency. A specific configuration of the stop button 232 for realizing these requests will be described below.

The acceleration/forward button 235 is an operation portion that accelerates the vehicle speed of the rice transplanter 10 during autonomous travel or causes the rice transplanter 10 to travel forward while the autonomous travel is temporarily stopped. The acceleration/forward button 235 is provided on the lower left side of the front surface of the main body of the operation device 20.

When the operator presses the acceleration/forward button 235 while the rice transplanter 10 is autonomously traveling, the output processing unit 212 outputs an acceleration instruction to the rice transplanter 10. The rice transplanter 10 accelerates the vehicle speed when acquiring the acceleration instruction. Each time the acceleration/forward button 235 is pressed, the rice transplanter 10 accelerates the vehicle speed in stages. When the acceleration/forward button 235 is long-pressed, the rice transplanter 10 continuously accelerates the vehicle speed while the button is long-pressed.

When the operator presses the acceleration/forward button 235 while the autonomous travel is temporarily stopped, the output processing unit 212 outputs a forward travel instruction to the rice transplanter 10. The rice transplanter 10 travels forward when acquiring the forward travel instruction. The rice transplanter 10 continues to travel forward while the acceleration/forward button 235 is pressed, and the rice transplanter 10 stops traveling when the acceleration/forward button 235 is no longer pressed.

The deceleration/backward button 236 is an operation portion that decelerates the vehicle speed of the rice transplanter 10 during autonomous travel or causes the rice transplanter 10 to travel backward while autonomous travel is temporarily stopped. The deceleration/backward button 236 is provided on the lower left side of the front surface of the main body of the operation device 20 and below the acceleration/forward button 235.

When the operator presses the deceleration/backward button 236 while the rice transplanter 10 is autonomously traveling, the output processing unit 212 outputs a deceleration instruction to the rice transplanter 10. When acquiring the deceleration instruction, the rice transplanter 10 decelerates the vehicle speed. Each time the deceleration/backward button 236 is pressed, the rice transplanter 10 decelerates the vehicle speed in stages. When the deceleration/backward button 236 is long-pressed, the rice transplanter 10 continuously decelerates the vehicle speed while the button is long-pressed.

When the operator presses the deceleration/backward button 236 while the autonomous travel is temporarily stopped, the output processing unit 212 outputs a backward travel instruction to the rice transplanter 10. When acquiring the backward travel instruction, the rice transplanter 10 travels backward. The rice transplanter 10 continues to travel backward while the deceleration/backward button 236 is pressed, and the rice transplanter 10 stops traveling when the deceleration/backward button 236 is no longer pressed.

The lifting button 237 is an operation portion that lifts the work device 14 while the autonomous travel is temporarily stopped. The lifting button 237 is provided on the lower right side of the front surface of the main body of the operation device 20. When the operator presses the lifting button 237 while the autonomously traveling rice transplanter 10 is temporarily stopped, the output processing unit 212 outputs a lifting instruction to the rice transplanter 10. The rice transplanter 10 lifts the height of the work device 14 when acquiring the lifting instruction.

The lowering button 238 is an operation portion that lowers the work device 14 while the autonomous travel is temporarily stopped. The lowering button 238 is provided on the lower right side of the front surface of the main body of the operation device 20 and below the lifting button 237. When the operator presses the lowering button 238 while the autonomously traveling rice transplanter 10 is temporarily stopped, the output processing unit 212 outputs a lowering instruction to the rice transplanter 10. The rice transplanter 10 lowers the height of the work device 14 when acquiring the lowering instruction.

As described above, the operation device 20 can cause the rice transplanter 10 to perform an action by receiving an operation of each of the operation portions 23 by the operator and outputting the action instruction corresponding to the operation to the rice transplanter 10 at a location away from the rice transplanter 10.

The operation device 20 is provided with a communication display unit 251 (LED) that indicates a communication state with the rice transplanter 10, an abnormality display unit 252 (LED) that is turned on when the rice transplanter 10 detects an obstacle or some trouble occurs in the rice transplanter 10, and the like.

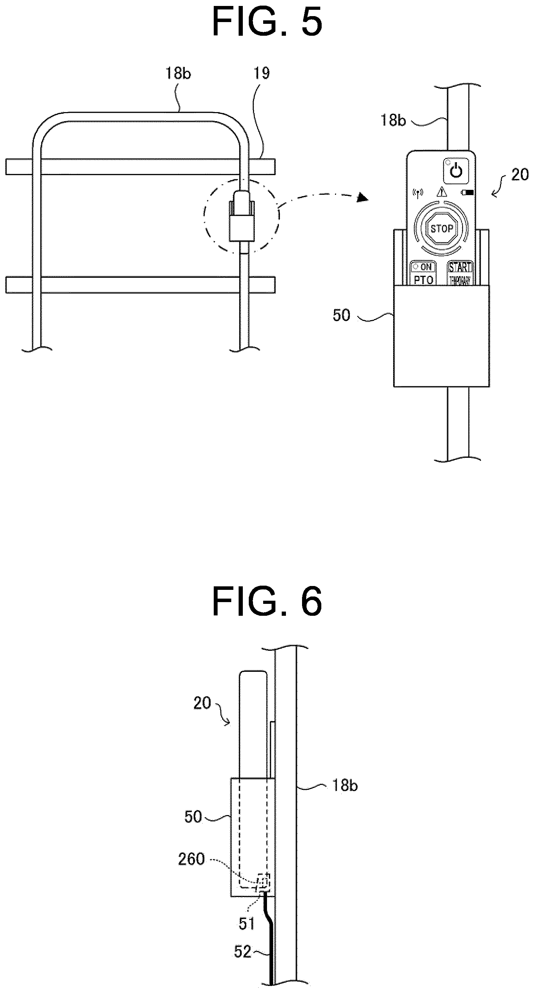

A charge terminal 260 (see FIG. 4) is provided on the bottom surface of the operation device 20. For example, as illustrated in FIG. 5, the operation device 20 can be housed in the housing portion 50 attached to a connection frame 18b of the rice transplanter 10. As illustrated in FIG. 6, a power supply terminal 51 is provided on an inner bottom surface of the housing portion 50, and a cable 52 for supplying electric power of a battery of the rice transplanter 10 is connected to the power supply terminal 51. Therefore, when the operation device 20 is housed in the housing portion 50, as illustrated in FIG. 6, the charge terminal 260 and the power supply terminal 51 are connected to each other so that the battery of the operation device 20 can be charged. The operator houses the operation device 20 in the housing portion 50 while riding on the rice transplanter 10 so that the operation device 20 can be charged and the loss of the operation device 20 can be prevented.

### [Specific Configuration of Stop Button 232]

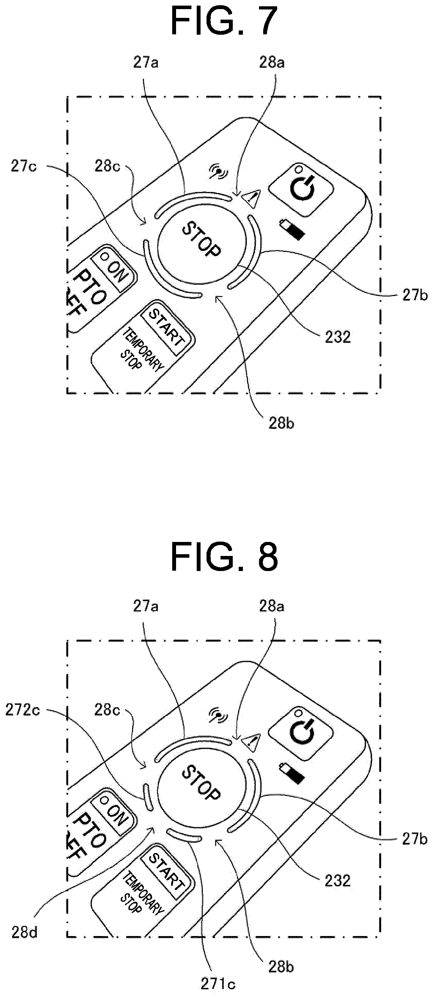

A specific configuration of the stop button 232 will be described with reference to FIGS. 4 and 7. FIG. 7 is a perspective view of the operation device 20 as viewed from the right side and is a partially enlarged view of the periphery of the stop button 232.

The stop button 232 is provided on the upper side of the front surface of the main body of the operation device 20, and a protruding portion 27 protruding forward from the front surface of the main body of the operation device 20 is provided near the stop button 232. The protruding portion 27 is an elongated wall-like member that rises forward from the front surface of the main body at a height of several millimeters and has a structure that can be recognized by the sense of touch when the user touches the protruding portion 27 with a finger.

Specifically, the protruding portion 27 is provided around the stop button 232. The protruding portion 27 is provided so as to surround the outer periphery of the stop button 232.

The protruding portion 27 includes a plurality of partial protruding portions. According to the present embodiment, the protruding portion 27 includes three partial protruding portions 27a, 27b, and 27c. The partial protruding portions 27a, 27b, and 27c each have the same shape. The partial protruding portion 27a is provided at the upper left of the stop button 232, the partial protruding portion 27b is provided at the upper right of the stop button 232, and the partial protruding portion 27c is provided at the lower center of the stop button 232.

A gap 28 is formed between the partial protruding portions adjacent to each other. For example, a gap 28a is formed between the partial protruding portion 27a and the partial protruding portion 27b, a gap 28b is formed between the partial protruding portion 27b and the partial protruding portion 27c, and a gap 28c is formed between the partial protruding portion 27c and the partial protruding portion 27a. According to the present embodiment, as illustrated in FIG. 4, when the center position of the stop button 232 is set as a circle center and the position of the gap 28a is set as 0 degree (the direction of 12 o' clock), the gap 28b is provided at the position of 120 degrees, and the gap 28c is provided at the position of 240 degrees. The positions of the gaps 28a, 28b, and 28c are not limited thereto.

The gap 28 is a region on the front surface (surface) of the main body where the protruding portions 27 are not formed, and is a region between the adjacent protruding portions 27.

Since the stop button 232 according to the present embodiment has a circular shape, the protruding portion 27 is also configured to have a circular shape along the shape of the stop button 232. Specifically, the partial protruding portions 27a, 27b, and 27c are each configured in an arc shape.

With the above-described configuration, the operator can recognize the position of the stop button 232 by the feeling (tactile sense) when the finger touches the protruding portions 27 without looking at each of the operation portions 23 of the operation device 20. Therefore, when the operator wants to stop the autonomous travel of the rice transplanter 10, the operator can immediately press the stop button 232 without looking at the operation device 20. Further, it is possible to prevent an erroneous operation in which the operator presses the stop button 232 unnecessarily. Thus, the operability of the operation device 20 can be improved.

In particular, since the erroneous operation of the stop button 232 can be prevented, the plurality of operation portions 23 having other functions can be provided near the stop button 232 as illustrated according to the present embodiment (see FIG. 4). Therefore, the functions of the operation device 20 can be expanded, and the operability can be further improved.

As described above, since the gap 28 is formed between the protruding portions 27 (see FIG. 7), it is possible to prevent a foreign substance from staying on the stop button 232. For example, when the rice transplanter 10 travels in the field F, water, mud, or the like may splash on the operation device 20, or rainwater may splash on the operation device 20. When the protruding portion 27 is provided so as to surround the stop button 232, a foreign substance is likely to accumulate inside the protruding portion 27. In this regard, according to the present embodiment, the protruding portion 27 includes the plurality of partial protruding portions, and the gap 28 is formed between the partial protruding portions adjacent to each other. Therefore, the gap 28 functions as a discharge passage from the inside to the outside of the protruding portion 27 so that the foreign substance inside the protruding portion 27 can be discharged. Therefore, it is possible to prevent the foreign substance from staying on the stop button 232.

In order to enhance the discharge function of a foreign substance, for example, as illustrated in FIG. 8, the partial protruding portion 27c may be divided into a partial protruding portion 271c and a partial protruding portion 272c, and a gap 28d may be provided at the position opposed to the gap 28a. Accordingly, when the operation device 20 is housed in the housing portion 50 or when the operation device 20 is gripped, the operation device 20 is in a standing posture, and thus a foreign substance is easily discharged through the gap 28d.

Although the three (see FIG. 7) or four (see FIG. 8) protruding portions 27 are provided according to the above-described embodiment, the number of protruding portions 27 is not limited, and the one protruding portion 27 or the five or more protruding portions 27 may be provided.

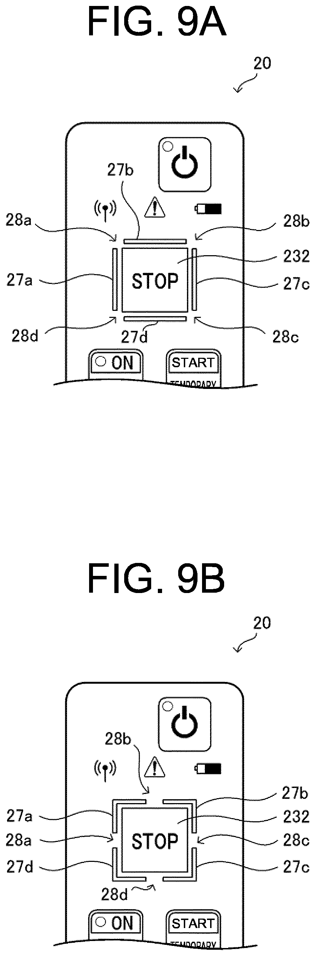

According to the above embodiment, the shape of the stop button 232 is circular, but according to another embodiment, the shape of the stop button 232 may be rectangular. For example, as illustrated in FIG. 9A, when the stop button 232 has a rectangular shape, the protruding portions 27 are linearly provided along the rectangular shape of the stop button 232. To be specific, the protruding portion 27 includes linear partial protruding portions 27a to 27d, and the partial protruding portions 27a to 27d are provided at positions adjacent to the respective sides (left side, upper side, right side, and lower side) of the stop button 232. Gaps 28a to 28d are each formed between the partial protruding portions adjacent to one another.

The protruding portion 27 and the gap 28 are not limited to the configuration illustrated in FIG. 9A, and may have a configuration illustrated in FIG. 9B.

According to another embodiment, the operation device 20 may be formed with a recessed portion that is hollowed out from the surface of the main body in the inward direction instead of the protruding portion 27.

According to each of the above-described embodiments, the protruding portion 27 is provided near (around) the stop button 232, but the operation portion 23 for which the protruding portion 27 is provided is not limited to the stop button 232. For example, since providing the protruding portion 27 can improve the operability and prevent erroneous operations, it is desirable to provide the protruding portion 27 near the operation portion 23 of particular importance. For example, the protruding portion 27 is provided near the operation portion 23 by which an action (for example, traveling action) of the rice transplanter 10 is started, the operation portion 23 by which an action of changing the posture of a component (for example, the work device 14) of the rice transplanter 10 is started, or the like. It is desirable that the operation portion 23 for which the protruding portion 27 is provided have a larger outer size than the other operation portions 23 (the second operation portion according to the present invention).

That is, the stop button 232 is an example of the first operation portion according to the present invention, and the first operation portion according to the present invention may be any operation portion that receives an instruction from the user to cause the work machine to perform a specific action.

The protruding portion 27 may be provided at the position corresponding to each of the plurality of operation portions 23. For example, the protruding portions 27 may be provided near the stop button 232 and near the start/stop button 233, respectively. In this case, the shape and the number of the protruding portions 27 provided near the stop button 232 and the shape and the number of the protruding portions 27 provided near the start/stop button 233 may be different from each other so as to be distinguished by the tactile sense of the operator.

The notification processing unit 213 may use different notification methods as the notification method in a case where the operation portion 23 (the stop button 232 in the above-described example) having the protruding portion 27 provided therefor receives an instruction from the operator and the notification method in a case where the other operation portion 23 receive an instruction from the operator. For example, when the operator presses the stop button 232, the notification processing unit 213 vibrates the vibration unit 24 for a long time, and when the operator presses the other operation portion 23, the notification processing unit 213 vibrates the vibration unit 24 for a short time. According to another embodiment, the notification processing unit 213 may use different vibration cycles of the vibration unit 24, different display colors of the display unit, different output sounds of the speaker, and the like, for the operation portion 23 having the protruding portion 27 provided therefor and the other operation portions 23.

### [Configuration of Grip Portion]

As illustrated in FIG. 4, grip portions 20L and 20R used by the operator to grip the operation device 20 are formed on the side surface of the main body of the operation device 20. The grip portion 20L is provided on the lower left side surface of the operation device 20, and the grip portion 20R is provided on the lower right side surface of the operation device 20. The grip portions 20L and 20R are constricted portions in which the side surface of the operation device 20 is curved inward, and are provided at the positions gripped by a hand. The operator holds and grips the grip portions 20L and 20R with the palm so as to stably operate the operation device 20. For example, the operator can press each of the operation portions 23 with the thumb of one hand while gripping the operation device 20 at the positions of the grip portions 20L and 20R with the one hand.

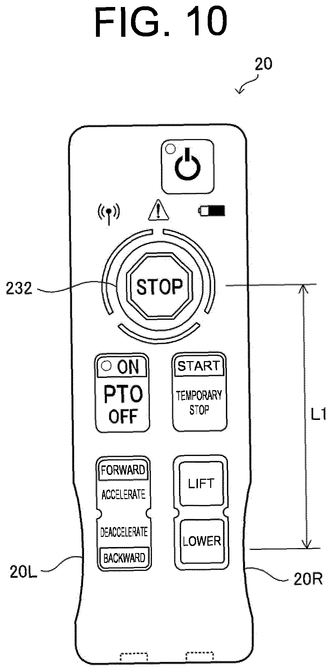

Here, in order to prevent erroneous operations of the stop button 232 during the autonomous travel, for example, as illustrated in FIG. 10, the stop button 232 may be provided at a position away from the grip portions 20L and 20R by a predetermined distance L1 or more. For example, the predetermined distance L1 is a distance by which the thumb of one hand of the operator does not reach the stop button 232 in a state where the operator grips the operation device 20 at the positions of the grip portions 20L and 20R with the one hand. Accordingly, it is possible to prevent the stop button 232 from being unnecessarily pressed during the autonomous travel.

Further, it is desirable that the operation portions 23 other than the stop button 232 are provided within the predetermined distance L1 (see FIG. 10). Thus, the operator can easily operate each of the operation portions 23 provided within the predetermined distance L1 with one hand.

As described above, the operation device 20 according to the present embodiment is a device that causes a work machine to perform an action and includes the operation portion 23 that is provided on the front surface of the main body of the operation device 20 and receives, from a user, an instruction to cause the work machine to perform a specific action and the protruding portion 27 that is provided near the operation portion 23 on the front surface of the main body and protrudes forward from the front surface of the main body. For example, the operation portion 23 is the stop button 232 that stops autonomous travel of the rice transplanter 10, and the protruding portion 27 is provided around the stop button 232. The protruding portion 27 includes the plurality of partial protruding portions provided around the stop button 232, and the gap 28 is formed between the partial protruding portions adjacent to each other. With the above configuration, for example, since the operation portion 23 can be specified only by the tactile sense of the hand, the operability of the operation device 20 can be improved. Further, since the gap 28 allows a foreign substance within the operation portion 23 to be discharged, the operability of the operation portion 23 can be improved.

### [Modification]

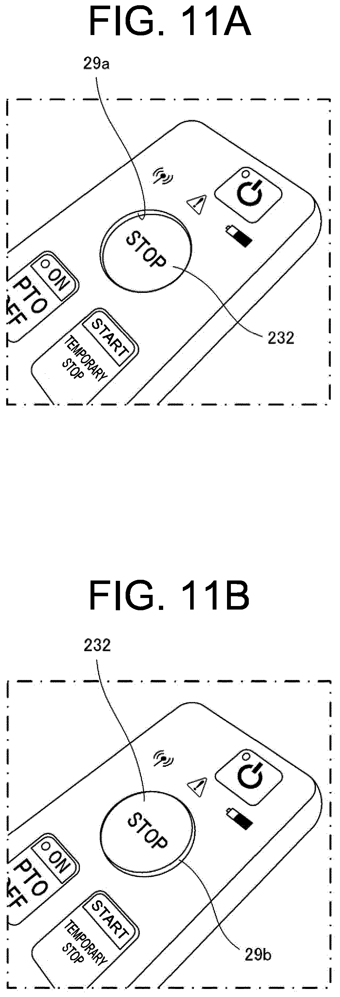

The operation device 20 in which the protruding portion 27 is omitted will be described. For example, as illustrated in FIG. 11A, the protruding portion 27 (see FIG. 4) is not provided around the stop button 232 of the operation device 20. In this case, the stop button 232 is provided with a step so that the operator can recognize the position of the stop button 232 by the touch (tactile sense) of a finger without looking at the operation device 20. To be more specific, a step 29a is formed so that the front surface (surface) of the stop button 232 is positioned below the front surface of the main body of the operation device 20.

As another example, as illustrated in FIG. 11B, the stop button 232 may be provided such that the front surface (surface) of the stop button 232 protrudes forward from the front surface of the main body of the operation device 20 to form a step 29b.

With the configuration illustrated in FIGS. 11A and 11B, the operator can grasp the position of the stop button 232 by recognizing the steps 29a and 29b by the tactile sense of the finger. According to the present invention, the configurations illustrated in FIGS. 11A and 11B may be applied to the configuration illustrated in FIG. 4. That is, in the operation device 20, the protruding portion 27 may be provided near the stop button 232 as well as the step 29a or 29b provided in the stop button 232.

### [Other Embodiments]

As another embodiment of the operation device 20, a switch button (not illustrated) that switches a long pressing function to be enabled and disabled may be provided on the front surface of the main body of the operation device 20.

For example, when the operator presses the switch button to enable the long pressing function, the reception processing unit 211 permits reception of an operation of the operation portion 23 for causing the rice transplanter 10 to start a predetermined action on condition that a long pressing operation has been performed, and rejects reception of a short pressing operation. For example, when the operator presses the switch button to enable the long pressing function, the reception processing unit 211 permits reception of a long pressing operation when the operator performs the long pressing operation on each of the start/stop button 233, the PTO button 234, the acceleration/forward button 235, the deceleration/backward button 236, the lifting button 237, and the lowering button 238. Therefore, it is possible to prevent erroneous reception of an operation that is not intended by the operator, and thus the safety can be improved.

The stop button 232 is required to immediately stop the autonomous travel in case of emergency, and therefore, even when the long pressing function is enabled, the reception of the short pressing operation is permitted.
The start/stop button 233 may permit only the long pressing operation when starting the autonomous travel and permit the short pressing operation when temporarily stopping the autonomous travel, regardless of the setting state of the long pressing function. According to another embodiment, when the long pressing function is disabled, the reception of the short pressing operation may be permitted for all the operation portions.

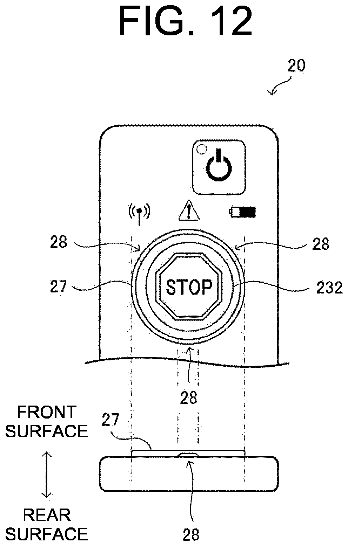

As another embodiment of the operation device 20, the gap 28 may be a cutout portion of the annular protruding portion 27. For example, the gap 28 may be a portion (cutout portion) where the height of the annular protruding portion 27 (protruding height toward the front) is low. The gap 28 may be a through-hole formed by cutting out the lower side (the main body front surface side) of the annular protruding portion 27. For example, FIG. 12 is a plan view of a part (upper side) of the operation device 20 and is a bottom view of the part. As illustrated in FIG. 12, the front surface side of the protruding portion 27 is formed to be connected in an annular shape, and the rear surface side is hollowed out to form the gap 28 (through-hole). With the configuration illustrated in FIG. 12, the user can recognize the protruding portion 27 in the entire periphery of the stop button 232 by the sense of touch, and the gap 28 can prevent a foreign substance from staying on the stop button 232.

According to another embodiment, the autonomous traveling system 1 may include an operation terminal (for example, tablet terminal) that performs various setting operations. The operation terminal performs, for example, a process of registering the field F, a process of registering the work vehicle, a process of registering the work device, a process of generating the target route, a process of setting travel information, and the like, in response to operations of the operator. The operation terminal can receive various operations that can be performed by the operation device 20, such as start and stop of the autonomous travel, and can remotely control the action of the rice transplanter 10. The operation terminal can display a situation during the autonomous travel on the display unit.

### [Appendices of Invention]

An outline of the invention extracted from the embodiment will be added. The configurations and processing functions described in the following appendices can be selected and arbitrarily combined.

### <Appendix 1>

An operation device that causes a work machine to perform an action, the operation device comprising:
a first operation portion that is provided on a front surface of a main body of the operation device and receives, from a user, an instruction to cause the work machine to perform a specific action; and
a protruding portion that is provided near the first operation portion on the front surface of the main body and protrudes forward from the front surface of the main body.

### <Appendix 2>

The operation device according to appendix 1, wherein
the first operation portion is a stopping operation portion that stops autonomous travel of the work machine, and
the protruding portion is provided around the stopping operation portion.

### <Appendix 3>

The operation device according to appendix 2, wherein
the protruding portion includes a plurality of partial protruding portions provided around the stopping operation portion, and
a gap is formed between the partial protruding portions adjacent to each other.

### <Appendix 4>

The operation device according to any one of appendices 1 to 3, comprising a second operation portion that is provided on the front surface of the main body of the operation device and receives, from a user, an instruction to cause the work machine to perform a predetermined action different from the specific action, wherein
the first operation portion has an external size larger than an external size of the second operation portion.

### <Appendix 5>

The operation device according to any one of appendices 1 to 4, wherein when the first operation portion receives an instruction from a user, at least any one of the operation device and the work machine notifies information indicating that the instruction has been received.

### <Appendix 6>

The operation device according to appendix 5, wherein the operation device notifies the information by at least any one of a method of displaying the information on a display unit provided in the operation device, a method of emitting a sound from a speaker provided in the operation device, and a method of vibrating a vibration unit provided in the operation device.

### <Appendix 7>

The operation device according to appendix 5, comprising a second operation portion that is provided on the front surface of the main body of the operation device and receives, from a user, an instruction to cause the work machine to perform a predetermined action different from the specific action, wherein
a notification method in a case where the first operation portion receives an instruction from the user is different from a notification method in a case where the second operation portion receives an instruction from the user.

### <Appendix 8>

The operation device according to any one of appendices 1 to 7, comprising a grip portion that is provided on a side surface of the main body of the operation device and is used by a user to grip the operation device, wherein
the first operation portion is provided at a position away from the grip portion by a predetermined distance or more.

### REFERENCE SIGNS LIST

1 AUTONOMOUS TRAVELING SYSTEM
10 RICE TRANSPLANTER (WORK MACHINE)
11 VEHICLE CONTROL DEVICE
14 WORK DEVICE
18a CONNECTION FRAME
18b CONNECTION FRAME
111 TRAVELING PROCESSING UNIT
112 LIFTING AND LOWERING PROCESSING UNIT
113 VEHICLE SPEED CONTROL PROCESSING UNIT
114 DRIVE PROCESSING UNIT
50 HOUSING PORTION
51 POWER SUPPLY TERMINAL
52 CABLE
20 OPERATION DEVICE
20L GRIP PORTION
20R GRIP PORTION
21 OPERATION CONTROL UNIT
22 STORAGE UNIT
23 OPERATION PORTION
24 VIBRATION UNIT
25 COMMUNICATION UNIT
27 PROTRUDING PORTION
27a PARTIAL PROTRUDING PORTION
27b PARTIAL PROTRUDING PORTION
27c PARTIAL PROTRUDING PORTION
28 GAP
211 RECEPTION PROCESSING UNIT
212 OUTPUT PROCESSING UNIT
213 NOTIFICATION PROCESSING UNIT
231 POWER BUTTON
232 STOP BUTTON (FIRST OPERATION PORTION)
233 START/STOP BUTTON (SECOND OPERATION PORTION)
234 PTO BUTTON (SECOND OPERATION PORTION)
235 ACCELERATION/FORWARD BUTTON (SECOND OPERATION PORTION)
236 DECELERATION/BACKWARD BUTTON (SECOND OPERATION PORTION)
237 LIFTING BUTTON (SECOND OPERATION PORTION)
238 LOWERING BUTTON (SECOND OPERATION PORTION)
260 CHARGE TERMINAL
F FIELD
L1 PREDETERMINED DISTANCE
R TARGET ROUTE

## Claims

1. An operation device that causes a work machine to perform an action, the operation device comprising:
a first operation portion that is provided on a front surface of a main body of the operation device and receives, from a user, an instruction to cause the work machine to perform a specific action; and
a protruding portion that is provided near the first operation portion on the front surface of the main body and protrudes forward from the front surface of the main body.

2. The operation device according to claim 1, wherein
the first operation portion is a stopping operation portion that stops autonomous travel of the work machine, and
the protruding portion is provided around the stopping operation portion.

3. The operation device according to claim 2, wherein
the protruding portion includes a plurality of partial protruding portions provided around the stopping operation portion, and
a gap is formed between the partial protruding portions adjacent to each other.

4. The operation device according to claim 1, comprising a second operation portion that is provided on the front surface of the main body of the operation device and receives, from a user, an instruction to cause the work machine to perform a predetermined action different from the specific action, wherein
the first operation portion has an external size larger than an external size of the second operation portion.

5. The operation device according to claim 1, wherein when the first operation portion receives an instruction from a user, at least any one of the operation device and the work machine notifies information indicating that the instruction has been received.

6. The operation device according to claim 5, wherein the operation device notifies the information by at least any one of a method of displaying the information on a display unit provided in the operation device, a method of emitting a sound from a speaker provided in the operation device, and a method of vibrating a vibration unit provided in the operation device.

7. The operation device according to claim 5, comprising a second operation portion that is provided on the front surface of the main body of the operation device and receives, from a user, an instruction to cause the work machine to perform a predetermined action different from the specific action, wherein
a notification method in a case where the first operation portion receives an instruction from the user is different from a notification method in a case where the second operation portion receives an instruction from the user.

8. The operation device according to claim 1, comprising a grip portion that is provided on a side surface of the main body of the operation device and is used by a user to grip the operation device, wherein
the first operation portion is provided at a position away from the grip portion by a predetermined distance or more.

9. A work machine that starts and stops autonomous travel in accordance with an instruction output from the operation device according to any one of claims 1 to 8.
